# EUROPEAN PATENT SPECIFICATION

(11) **EP 2 631 564 B1**
(45) Date of publication and mention of the grant of the patent: **28.09.2016**
(21) Application number: 12001230.7
(22) Date of filing: 24.02.2012
(51) Int. Cl.: F25B 23/00, F25B 25/00

(54) **Reliable cooling system for operation with a two-phase refrigerant**
Zuverlässiges Kühlsystem zum Betrieb mit einem Zweiphasenkühlmittel
Système de refroidissement fiable pour fonctionnement avec réfrigérant à deux phases

(43) Date of publication of application: 28.08.2013
(73) Proprietor: Airbus Operations GmbH, 21129 Hamburg (DE)
(72) Inventor: Piesker, Markus, 21129 Hamburg (DE); Sieme, Martin, 21129 Hamburg (DE); Kiryaman, Ahmet Kayihan, 21129 Hamburg (DE)
(74) Representative: Schicker, Silvia

(56) References cited:
- EP-A2- 1 643 197
- WO-A1-2008/130412
- WO-A1-2009/039057
- US-A- 3 675 441

## Description

The invention relates to a cooling system for operation with a two-phase refrigerant which is in particular suitable for use on board an aircraft. Further, the invention relates to a method of operating a cooling system of this kind.

Cooling systems for operation with a two-phase refrigerant are known from DE 10 2006 005 035 B3, WO 2007/088012 A1, DE 10 2009 011 797 A1 and US 2010/0251737 A1 and may be used for example to cool food that is stored on board a passenger aircraft and intended to be supplied to the passengers. Typically, the food provided for supplying to the passengers is kept in mobile transport containers. These transport containers are filled and precooled outside the aircraft and after loading into the aircraft are deposited at appropriate locations in the aircraft passenger cabin, for example in the galleys. In order to guarantee that the food remains fresh up to being issued to the passengers, in the region of the transport container locations cooling stations are provided, which are supplied with cooling energy from a central refrigerating device and release this cooling energy to the transport containers, in which the food is stored.

In the cooling systems known from DE 10 2006 005 035 B3, WO 2007/088012 A1, DE 10 2009 011 797 A1 and US 2010/0251737 A1 the phase transitions of the refrigerant flowing through the circuit that occur during operation of the system allow the latent heat consumption that then occurs to be utilized for cooling purposes. The refrigerant mass flow needed to provide a desired cooling capacity is therefore markedly lower than for example in a liquid cooling system, in which a one-phase liquid refrigerant is used. Consequently, the cooling systems described In DE 10 2006 005 035 B3, WO 2007/088012 A1, DE 10 2009 011 797 A1 and US 2010/0251737 A1 may have lower tubing cross sections than a liquid cooling system with a comparable cooling capacity and hence have the advantages of a lower installation volume and a lower weight. What is more, the reduction of the refrigerant mass flow makes it possible to reduce the conveying capacity needed to convey the refrigerant through the cooling circuit of the cooling system. This leads to an increased efficiency of the system because less energy is needed to operate a corresponding conveying device, such as for example a pump, and moreover less additional heat generated by the conveying device during operation of the conveying device has to be removed from the cooling system.

WO 2009/039057 A1 relates to a sub-ambient cooling system according to the preamble of claim 1 including a closed loop of fluid with an evaporator, a condenser, and a pump. According to an embodiment, a cooling system includes additional components, such as a second condenser that dispenses thermal energy to a second fluid loop, which may ultimately dissipate the thermal energy to ambient air. In particutar, the second condenser transfers thermal energy to a heat exchanger of the second fluid loop. These additional components help compensate when the temperature of the ambient air has risen higher than an acceptable maximum.

The invention is directed to the object to provide a cooling system for operation with a two-phase refrigerant which has a high operational reliability and hence is in particular suitable for use on board an aircraft. Further, the invention is directed to the object to provide a method of operating a cooling system of this kind.

These objects are achieved by a cooling system having the features of claim 1 and a method of operating a cooling system having the features of claim 14.

A cooling system, which is in particular suitable for use on board an aircraft for cooling heat generating components or food comprises a first cooling circuit allowing circulation of a two-phase refrigerant therethrough. The two-phase refrigerant circulating in the first cooling circuit is a refrigerant, which upon releasing cooling energy to a cooling energy consumer is converted from the liquid to the gaseous state of aggregation and is then converted back to the liquid state of aggregation. The two-phase refrigerant may for example be CO₂ or R134A (CH₂F-CF₃). Electric or electronic systems, such as avionic systems or fuel cell systems usually have to be cooled at a higher temperature level than food. For cooling these systems, for example Galden^{®} can be used as a two-phase refrigerant. The evaporating temperature of Galden^{®} at a pressure of 1 bar is approximately 60°C.

A first evaporator of the cooling system, which forms an interface between the first cooling circuit and a first cooling energy consumer, is disposed in the first cooling circuit. The first evaporator may, for example, comprise a heat exchanger which provides for a thermal coupling of the refrigerant flowing through the first cooling -circuit and a fluid to be cooled, such as for example air to be supplied to mobile transport containers for cooling food stored in the mobile transport containers or any heat generating component on board the aircraft. The two-phase refrigerant is supplied to the first evaporator in its liquid state of aggregation. Upon releasing its cooling energy to the first cooling energy consumer, the refrigerant is evaporated and thus exits the first evaporator in its gaseous state of aggregation.

The cooling system further comprises a first condenser disposed in the first cooling circuit. The refrigerant which is evaporated in the first evaporator, via a portion of the first cooling circuit downstream of the first evaporator and upstream of the first condenser, is supplied to the first condenser in its gaseous state of aggregation. In the first condenser, the refrigerant is condensed and hence exits the first condenser in its liquid state of aggregation. A first heat sink is adapted to provide cooling energy to the first condenser. The first heat sink may be a chiller or any other suitable heat sink. For example, in a cooling system employing Galden^{®} as the two-phase refrigerant flowing through the first cooling circuit the first condenser may be operated without a chiller. The first heat sink then may, for example, be formed as a fin cooler or outer skin heat exchanger which is cooled by ambient air.

The cooling system further comprises a second cooling circuit allowing circulation of a two phase refrigerant there through a second evaporator disposed in the second cooling circuit, a second condenser disposed in the second cooling circuit and a second heat sink adapted to provide cooling energy to the second condenser. The components of the cooling system which are associated with the second cooling circuit may be designed as described above for the respective components of the cooling system which are associated with the first cooling circuit.

A cooling energy transfer arrangement of the cooling system is adapted to transfer cooling energy provided by the first heat sink and/or the first condenser to the second cooling circuit or to transfer cooling energy provided by the second heat sink and/or the second condenser to the first cooling circuit. Preferably, the cooling energy transfer arrangement is adapted to couple the first heat sink and/or the first condenser to the second cooling circuit or to couple the second heat sink and/or the second condenser to the first cooling circuit in dependence on the operating state of the cooling system. In particular, the cooling energy transfer arrangement preferably is adapted to transfer at least a part of the cooling energy provided by the first heat sink and/or the first condenser to the second cooling circuit, if the amount cooling energy provided by the second heat sink and/or the second condenser is not sufficient to ensure proper operation of the second evaporator. By contrast, in operational states of the cooling system wherein the amount cooling energy provided by the first heat sink and/or the first condenser is not sufficient to ensure proper operation of the first evaporator the cooling energy transfer arrangement preferably is adapted to transfer at least a part of the cooling energy provided by the second heat sink and/or the second condenser to the second cooling circuit. The cooling energy transfer arrangement thus allows to at least partially compensate for a capacity overload, malfunctioning or failure of one or more of the cooling energy generating components in one of the two cooling circuits. The cooling system thus is distinguished by a high operational reliability rendering the cooling system suitable for use on board an aircraft.
In a preferred embodiment of the cooling system a third condenser is disposed in the first cooling circuit. The third condenser may be arranged in the first cooling circuit in parallel to the first condenser such that the refrigerant flowing through the first cooling circuit may be supplied in parallel to the first and the third condenser. Preferably, the first and the third condenser are controllable and operable independently. Further, the cooling system may be equipped with a third heat sink which is adapted to provide cooling energy to the third condenser. The redundant design of a first cooling circuit comprising two condensers and two heat sinks ensures that the first evaporator can be supplied with a sufficient amount of cooling energy even in case of malfunctioning or failure of one or more of the cooling energy generating components in the first cooling circuit. Further, in case of failure of the second condenser and/or the second heat sink the second evaporator may be provided with cooling energy by the first heat sink, the first condenser, the third heat sink and/or the third condenser, as required. As a result, the operational reliability of the overall system may be enhanced.

The cooling system further may comprise one or more sub-cooler(s) which serve(s) to sub-cool refrigerant exiting the condenser(s). Preferably each of the condensers of the cooling system is coupled to a sub-cooler which provides for an appropriate sub-cooling of the refrigerant exiting its associated condenser. The condensers and their associated sub-coolers may be designed in the form of condenser/sub-cooler assembly units. Sub-cooling the refrigerant exiting the condensers ensures that the refrigerant is supplied to a conveying device discharging refrigerant from the condensers in its liquid state of aggregation and sufficiently sub-cooled such that cavitation in the conveying device due to an unintended evaporation of the refrigerant within the conveying device is prevented. As a result, excess wear of the conveying device due to cavitation can be avoided.

Further, the cooling system may comprise a first accumulator which is disposed in the first cooling circuit and with serves to store refrigerant condensed in the first condenser prior to being supplied to the sub-cooler associated with the first condenser. The first accumulator may also be used to store refrigerant condensed in the third condenser prior to being supplied to the sub-cooler associated with the third condenser. If desired, it is, however, also possible to connect the third condenser to a separate accumulator for receiving refrigerant condensed in the third condenser. Similarly, in the second cooling circuit a second accumulator may be provided for receiving refrigerant condensed in the second condenser prior to being supplied to the sub-cooler associated with the second condenser.

The cooling energy transfer arrangement may comprise a heat exchanger which is adapted to be connected to the first cooling circuit such that refrigerant exiting the first condenser is thermally coupled to the refrigerant flowing through the second cooling circuit. Further, the heat exchanger may be adapted to be connected to the second cooling circuit such that refrigerant exiting the second condenser is thermally coupled to the refrigerant flowing through the first cooling circuit. Preferably, the heat exchanger is adapted to thermally couple the first and the second cooling circuit while maintaining a hermetic separation of the first and the second cooling circuit. This may be achieved by providing the heat exchanger with separate and hermatically sealed flow path fields for the refrigerant flowing through the first cooling circuit and the refrigerant flowing through the second cooling circuit. A hermetic separation of the first and the second cooling circuit enhances the operational reliability of the cooling system, since a leakage in one the two cooling circuits does not affect the operability of the other cooling circuit. Further, if desired, different refrigerants may be employed in the first and the second cooling circuit.

The heat exchanger may comprise a condenser wherein refrigerant flowing through the first cooling circuit may be condensed by means of cooling energy transfer from the refrigerant flowing through the second cooling circuit or wherein refrigerant flowing through the second cooling circuit may be condensed by means of cooling energy transfer from the refrigerant flowing through the first cooling circuit. Further, the heat exchanger may comprise a sub-cooler which serves to sub-cool refrigerant exiting the condenser of the heat exchanger. Sub-cooling the refrigerant exiting the heat exchanger ensures that the refrigerant is supplied to a conveying device discharging refrigerant from the heat exchanger in its liquid state of aggregation and sufficiently sub-cooled such that cavitation in the conveying device due to an unintended evaporation of the refrigerant within the conveying device is prevented. As a result, excess wear of the conveying device due to cavitation can be avoided.

The heat exchanger may be adapted to be connected to the first cooling circuit such that refrigerant flowing through the first cooling circuit is directed in series first through the condenser and thereafter through the sub-cooler of the heat exchanger. Further, the coupling between the heat exchanger and the first cooling circuit may be designed such that refrigerant exiting the heat exchanger is recirculated to the first condenser. If a third condenser is provided in the first cooling circuit, the heat exchanger may be adapted to be connected to the first cooling circuit such that the refrigerant exiting the heat exchanger is recirculated in parallel to the first and the third condenser. Further, the heat exchanger may be adapted to be connected to the second cooling circuit such that refrigerant flowing through the second cooling circuit first is directed through the condenser of the heat exchanger and thereafter is discharged to the second accumulator which also serves to store refrigerant condensed in the second condenser. The coupling between the heat exchanger and the first cooling circuit further may be designed such that refrigerant from the second accumulator may be directed in series first through the sub-cooler associated with the second condenser and thereafter through the sub-cooler of the heat exchanger. After exiting the sub-cooler of the heat exchanger the refrigerant flowing through the second cooling circuit may be directed to the second evaporator.

The cooling energy transfer arrangement further may comprise a valve which in its closed state is adapted to disconnect the heat exchanger from the first cooling circuit and which in its open state is adapted to connect the heat exchanger to the first cooling circuit. A further valve may be provided which in its closed state is adapted to disconnect the heat exchanger from the second cooling circuit and which in its open state is adapted to connect the heat exchanger to the second cooling circuit. A thermal coupling between the first and the second cooling circuit thus, by means of the valve(s), may be enabled or disabled, as desired.

Alternatively or additionally to a heat exchanger the cooling energy transfer arrangement of the cooling system may comprises a tubing system which is adapted to connect the first evaporator to the second condenser. This allows the first evaporator to be supplied with liquid refrigerant condensed in the second condenser. Further, the tubing system may be adapted to connect the second evaporator to the first condenser so as to allow the second evaporator to be supplied with liquid refrigerant condensed in the first condenser. Preferably, the tubing system is adapted to maintain a hermetic separation of the first and the second cooling circuit. If a third condenser and a third heat sink is provided in the first cooling circuit, the tubing system of the cooling energy transfer arrangement preferably also is adapted to connect the second evaporator to the third condenser while maintaining a hermetic separation of the first and the second cooling circuit.

Further, the cooling system may comprise a third accumulator which is disposed in the second cooling circuit and which is adapted to store refrigerant condensed in the first condenser prior to being supplied to the sub-cooler associated with the first condenser. A fourth accumulator may be disposed in the first cooling circuit and be adapted to receive refrigerant condensed in the second condenser. The third accumulator may also be used to store refrigerant condensed in the third condenser prior to being supplied to the sub-cooler associated with the third condenser. If desired, it is, however, also possible provide the cooling system with a fifth accumulator disposed in the second cooling circuit and being adapted to receive refrigerant condensed in the third condenser and/or a sixth accumulator disposed in the first cooling circuit and being adapted to receive refrigerant condensed in the third condenser.

The cooling system may comprise a first cooveying device for conveying refrigerant through the first cooling circuit. The first conveying device may be connected to the first and the fourth accumulator. If also a sixth accumulator is disposed in the first cooling circuit, the first conveying device preferably also is connected to the sixth accumulator. This configuration of the cooling system allows the use of a single conveying device for conveying the refrigerant through the first cooling circuit. Alternatively or additionally thereto, the cooling system may comprise a second conveying device for conveying refrigerant through the second cooling circuit. The second conveying device may be connected to the second and the third accumulator. If also a fifth accumulator is disposed in the second cooling circuit, the second conveying device preferably also is connected to the fifth accumulator. This configuration of the cooling system allows the use of a single conveying device for conveying the refrigerant through the second cooling circuit. The cooling system, however, also may comprise a plurality of conveying devices. For example, a selected number of accumulators or each of the accumulators provided in the cooling system may be connected to a conveying device for discharging refrigerant from the associated accumulator.

The cooling system further may comprise a first interruption device adapted to interrupt a connection between a conveying device, in particular the first conveying device and the first accumulator, if a refrigerant level in the first accumulator falls below a predetermined threshold value, a second interruption device adapted to interrupt a connection between a conveying device, in particular the second conveying device and the second accumulator, if a refrigerant level in the second accumulator falls below a predetermined threshold value, a third interruption device adapted to interrupt a connection between a conveying device, in particular the second conveying device and the third accumulator, if a refrigerant level in the third accumulator falls below a predetermined threshold value, a fourth interruption device adapted to interrupt a connection between a conveying device, in particular the first conveying device and the fourth accumulator, if a refrigerant level in the fourth accumulator falls below a predetermined threshold value, a fifth interruption device adapted to interrupt a connection between a conveying device, in particular the second conveying device and the fifth accumulator, if a refrigerant level in the fifth accumulator falls below a predetermined threshold value, and/or a sixth interruption device adapted to interrupt a connection between a conveying device, in particular the first conveying device and the sixth accumulator, if a refrigerant level in the sixth accumulator falls below a predetermined threshold value.

The interruption devices ensure that the conveying devices do not convey gaseous refrigerant from accumulators which do not contain a sufficient amount of liquid refrigerant. Thereby, excessive wear of the conveying devices due to cavitation can be prevented. The interruption devices may comprise respective controllable valves which may be disposed in the first and/or the second cooling circuit(s) and which may be controlled in dependence of the refrigerant levels in the accumulators measured, for example, by appropriate fill level sensors. Alternatively or additionally thereto, the interruption devices may comprise float valves which are disposed in the accumulators and with close a respective refrigerant outlet of the accumulators, as soon as a refrigerant level in the accumulators falls below a predetermined threshold value.

In a further embodiment of the cooling system the cooling energy transfer arrangement may comprise a tubing and valve system which is adapted to establish a fluid connection between the first and the second cooling circuit. The cooling system then can be of a particularly low-volume and light-weight design while still being operable with the desired redundance and hence reliability.

The cooling system then preferably further comprises a first detection device adapted to detect the amount of refrigerant circulating in the first cooling circuit, and/or a second detection device adapted to detect the amount of refrigerant circulating in the second cooling circuit. A control unit may be adapted to control the tubing and valve system of the cooling energy transfer arrangement in dependence on signals provided to the control unit by the first and/or the second detection device. In particular, the control unit may be adapted to control the tubing and valve system of the cooling energy transfer arrangement such that a fluid connection between the first and the second cooling circuit is only established, if the signals provided to the control unit by the first and/or the second detection device indicate that an amount of refrigerant circulating in the first cooling circuit and/or an amount of refrigerant circulating in the second cooling circuit exceed(s) a predetermined threshold value. This ensures that a fluid connection between the first and the second cooling circuit is not established in case of a leakage in one of the cooling circuits.

Further, the control unit may adapted to control the tubing and valve system of the cooling energy transfer arrangement such that a fluid connection between the first condenser and the first evaporator and/or a fluid connection between the third condenser and the first evaporator is/are interrupted, in case a fluid connection between the first and the second cooling circuit is established in the event of failure of the cooling energy supply to the first evaporator via the first cooling circuit. Alternatively or additionally thereto, the control unit may adapted to control the tubing and valve system of the cooling energy transfer arrangement such that a fluid connection between the second condenser and the second evaporator is interrupted, in case a fluid connection between the first and the second cooling circuit is established in the event of failure of the cooling energy supply to the second evaporator via the second cooling circuit.

Moreover, the control unit may be adapted to interrupt the operation of a first conveying device for conveying refrigerant through the first cooling circuit, in case a fluid connection between the first and the second cooling circuit is established in the event of failure of the cooling energy supply to the first evaporator via the first cooling circuit, and/or to interrupt the operation of a second conveying device for conveying refrigerant through the second cooling circuit, in case a fluid connection between the first and the second cooling circuit is established in the event of failure of the cooling energy supply to the second evaporator via the second cooling circuit.

In a method of operating a cooling system, in particular for use on board an aircraft, a two-phase refrigerant is circulated through a first cooling circuit. The refrigerant circulating through the first cooling circuit is evaporated in a first evaporator disposed in the first cooling circuit. During normal operation of the cooling system the refrigerant circulating through the first cooling circuit is condensed in a first condenser disposed in the first cooling circuit. During normal operation of the cooling system cooling energy is providing to the first condenser from a first heat sink. Further, a two-phase refrigerant is circulated through a second cooling circuit. The refrigerant circulating through the second cooling circuit is evaporated in a second evaporator disposed in the second cooling circuit. During normal operation of the cooling system the refrigerant circulating through the second cooling circuit is condensed in a second condenser disposed in the second cooling circuit. During normal operation of the cooling system cooling energy is providing to the second condenser from a second heat sink. In the event of failure of the cooling energy supply to the second evaporator via the second cooling circuit cooling energy provided by the first heat sink and/or the first condenser is transferred to the second cooling circuit. Alternatively or additionally thereto, in the event of failure of the cooling energy supply to the first evaporator via the first cooling circuit cooling energy provided by the second heat sink and/or the second condenser is transferred to the first cooling circuit.

Preferred embodiments of the invention now are explained in more detail with reference to the enclosed schematic drawings wherein
- Figure 1: shows a first embodiment of a cooling system suitable for operation with a two-phase refrigerant,
- Figure 2: shows a second embodiment of a cooling system suitable for operation with a two-phase refrigerant,
- Figure 3: shows a third embodiment of a cooling system suitable for operation with a two-phase refrigerant,
- Figure 4: shows an accumulator arrangement which may be employed in the cooling system of Figure 3, and
- Figure 5: shows a fourth embodiment of a cooling system suitable for operation with a two-phase refrigerant.

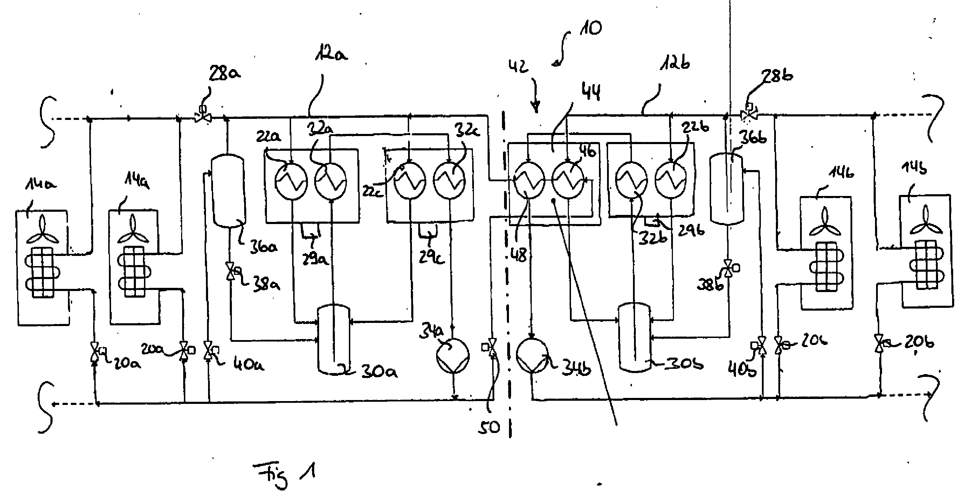

Figure 1 depicts a cooling system 10 which on board an aircraft, for example, may be employed to cool food provided for supplying to the passengers. The cooling system 10 of Figure 1 comprises a first cooling circuit 12a allowing circulation of a two-phase refrigerant therethrough. The two-phase refrigerant circulating through the first cooling circuit 12a may for example be CO₂ or R134A. Two first evaporators 14a are disposed in the first cooling circuit 12a. Each of the first evaporators 14a comprises a refrigerant inlet and a refrigerant outlet. The refrigerant flowing through the first cooling circuit 12a is supplied to the refrigerant inlets of the first evaporators 14a in its liquid state of aggregation. Upon flowing through the first evaporators 14a the refrigerant releases its cooling energy to a cooling energy consumer which in the embodiment of a cooling system 10 depicted in Figure 1 is formed by the food to be cooled. Upon releasing its cooling energy, the refrigerant is evaporated and hence exits the first evaporators 14a at their refrigerant outlets in its gaseous state of aggregation.

The cooling system 10 of further comprises a second cooling circuit 12b allowing circulation of a two-phase refrigerant therethrough. The two-phase refrigerant circulating through the second cooling circuit 12a may also for example be CO₂ or R134A. Two second evaporators 14b are disposed in the second cooling circuit 12b. Each of the second evaporators 14b comprises a refrigerant inlet and a refrigerant outlet. The refrigerant flowing through the second cooling circuit 12b is supplied to the refrigerant inlets of the second evaporators 14b in its liquid state of aggregation. Upon flowing through the second evaporators 14b the refrigerant releases its cooling energy to a cooling energy consumer which in the embodiment of a cooling system 10 depicted in Figure 1 is formed by the food to be cooled. Upon releasing its cooling energy, the refrigerant is evaporated and hence exits the second evaporators 14b at their refrigerant outlets in its gaseous state of aggregation.

The cooling system 10 usually is operated such that a dry evaporation of the refrigerant occurs in the evaporators 14a, 14b. This allows an operation of the cooling system 10 with a limited amount of refrigerant circulating in the cooling circuits 12a, 12b. As a result, the static pressure of the refrigerant prevailing in the cooling circuit 12a, 12b in the non-operating state of the cooling system 10 is low, even at high ambient temperatures. Further, negative effects of a leakage in the cooling system 10 are limited. Occurrence of a dry evaporation in the evaporators 14a, 14b, however, can only be ensured by an appropriate control of the amount of refrigerant supplied to the evaporators 14a, 14b in dependence on the operational state of the evaporators 14a, 14b, i.e. the cooling energy requirement of the cooling energy consumers coupled to the evaporators 14a, 14b.

The supply of refrigerant to the first evaporators 14a is controlled by respective valves 20a, which are disposed in the first cooling circuit 12a upstream of each of the first evaporators 14a. Similarly, the supply of refrigerant to the second evaporators 14b is controlled by respective valves 20b, which are disposed in the second cooling circuit 12b upstream of each of the second evaporators 14b. The valves 20a, 20b may comprise a nozzle for spraying the refrigerant into the evaporators 14a, 14b and to distribute the refrigerant within the evaporators 14a, 14b. The spraying of the refrigerant into the evaporators 14a, 14b may be achieved, for example, by supplying refrigerant vapor from the evaporators 14a, 14b to the nozzles of the valves 20a, 20b and/or by evaporation of the refrigerant due to a pressure decrease of the refrigerant downstream of the valves 20a, 20b.

To ensure occurrence of a dry evaporation in the evaporators 14a, 14b, a predetermined amount of refrigerant is supplied to the evaporators 14a, 14b by appropriately controlling the valves 20a, 20b. Then, a temperature TK1 of the refrigerant at the refrigerant inlets of the evaporators 14a, 14b and a temperature TA2 of the fluid to be cooled by the evaporators 14a, 14b, for example air supplied to the cooling energy consumers, is measured, preferably while a fan conveying the fluid to be cooled to the cooling energy consumers is running. Further, the pressure of the refrigerant in the evaporators 14a, 14b or at the refrigerant outlets of the evaporators 14a, 14b is measured. If a temperature difference between the temperature TA2 of the fluid to be cooled by the evaporators 14a, 14b and the temperature TK1 of the refrigerant at the refrigerant inlets of the evaporators 14a, 14b exceeds a predetermined threshold value, for example 8K, and the pressure of the refrigerant in the evaporators 14a, 14b lies within a predetermined range, the refrigerant supplied to the evaporators 14a, 14b is thoroughly evaporated and possibly also super-heated by the evaporators 14a, 14b. Hence, the valves 20a, 20b again can be controlled so as to supply a further predetermined amount of refrigerant to the evaporators 14a, 14b.

Further, the cooling system 10 comprises a first condenser 22a which is disposed in the first cooling circuit 12a. A second condenser 22b is disposed in the second cooling circuit 12b. Finally, a third condenser 22c is disposed in the first cooling circuit 12a in addition to the first condenser 22a. Each condenser 22a, 22b, 22c has a refrigerant inlet and a refrigerant outlet. The refrigerant which is evaporated in the first evaporators 14a, via a portion of the first cooling circuit 12a downstream of the first evaporators 14a and upstream of the condensers 22a, 22c, is supplied to the refrigerant inlets of the condensers 22a, 22c in its gaseous state of aggregation. The supply of refrigerant from the first evaporators 14a to the condensers 22a, 22c is controlled by means of a valve 28a. The valve 28a is adapted to control the flow of refrigerant through the first cooling circuit 12a such that a defined pressure gradient of the refrigerant in the portion of the first cooling circuit 12a between the refrigerant outlets of the first evaporators 14a and the refrigerant inlets of the condensers 22a, 22c is adjusted. The pressure gradient of the refrigerant in the portion of the first cooling circuit 12a between the refrigerant outlets of the first evaporators 14a and the refrigerant inlets of the condensers 22a, 22c induces a flow of the refrigerant from the first evaporators 14a to the condensers 22a, 22c.

The refrigerant which is evaporated in the second evaporators 14b, via a portion of the second cooling circuit 12b downstream of the second evaporators 14b and upstream of the second condenser 22b, is supplied to the refrigerant inlet of the second condenser 22b in its gaseous state of aggregation. The supply of refrigerant from the second evaporators 14b to the second condenser 22b is controlled by means of a valve 28b. The valve 28b is adapted to control the flow of refrigerant through the second cooling circuit 12b such that a defined pressure gradient of the refrigerant in the portion of the second cooling circuit 12b between the refrigerant outlets of the second evaporators 14b and the refrigerant inlet of the second condenser 22b is adjusted. The pressure gradient of the refrigerant in the portion of the second cooling circuit 12b between the refrigerant outlets of the second evaporators 14b and the refrigerant inlet of the second condenser 22b induces a flow of the refrigerant from the second evaporators 14b to the second condenser 22b.

Each of the condensers 22a, 22b, 22c is thermally coupled to a heat sink 29a, 29b, 29c designed in the form of a chiller. The cooling energy provided by the heat sinks 29a, 29b, 29c in the condensers 22a, 22b, 22c is used to condense the refrigerant. Thus, the refrigerant exits the condensers 22a, 22b, 22c at respective refrigerant outlets in its liquid state of aggregation. Liquid refrigerant from the first and the third condenser 22a, 22c is supplied to a first accumulator 30a. Liquid refrigerant from the second condenser 22b is supplied to a second accumulator 30b. Within the accumulators 30a, 30b the refrigerant is stored in the form of a boiling liquid.

In the cooling circuits 12a, 12b the condensers 22a, 22b, 22c form a "low-temperature location" where the refrigerant, after being converted into its gaseous state of aggregation in the evaporators 14a, 14b, is converted back into its liquid state of aggregation. A particularly energy efficient operation of the cooling system 10 is possible, if the condensers 22a, 22b, 22c are installed at a location where heating of the condensers 22a, 22b, 22c by ambient heat is avoided as far as possible. When the cooling system 10 is employed on board an aircraft, the condensers 22a, 22b, 22c preferably are installed outside of the heated aircraft cabin behind the secondary aircraft structure, for example in the wing fairing, the belly fairing or the tail cone. The same applies to the accumulators 30a, 30b. Further, the condensers 22a, 22b, 22c and/or the accumulators 30a, 30b may be insulated to maintain the heat input from the ambient as low as possible.

The first accumulator 30a may, for example, be an accumulator as it is described in the non-published German patent application DE 10 2011 014 943. Liquid refrigerant from a sump of the first accumulator 30a is directed to a first sub-cooler 32a. The first sub-cooler 32a is associated with the first condenser 22a. The second accumulator 30b may, for example, also be an accumulator as it is described in the non-published German patent application DE 10 2011 014 943. Liquid refrigerant from a sump of the second accumulator 30b is directed to a second sub-cooler 32b. The second sub-cooler 32b is associated with the second condenser 22b. Refrigerant exiting the first sub-cooler 32a is directed to a third sub-cooler 32c associated with the third condenser 22c. The sub-coolers 32a, 32b, 32c serve to sub-cool the liquid refrigerant and to thus prevent an undesired evaporation of the refrigerant. This ensures that the refrigerant is supplied to a first conveying device 34a for conveying refrigerant through the first cooling circuit 12a, which is embodied in the form of a pump, and to asecond conveying device 34b for conveying refrigerant through the second cooling circuit 12b, which also is embodied in the form of a pump, in its liquid state of aggregation. Thus, dry operation of the conveying devices 34a, 34b and failure of the conveying devices 34a, 34b can be prevented.

The cooling system 10 further comprises a first storage container 36a which is disposed in the first cooling circuit 12a downstream of the first conveying device 34a, wherein the supply of refrigerant to the first storage container 36a is controlled by means of a valve 40a. A second storage container 36b is disposed in the second cooling circuit 12b downstream of the second conveying device 34b, wherein the supply of refrigerant to the second storage container 36b is controlled by means of a valve 40b. The storage containers 36a, 36b serve as backup reservoir for operational situations of the cooling system 10, wherein the volume of the first and the second accumulator 30a, 30b, respectively, is not sufficient so as to receive the entire amount of liquid refrigerant provided by the condensers 22a, 22b, 22c. Valves 38a, 38b serve to control the supply of refrigerant from the storage containers 36a, 36b to the first and the second accumulator 30a, 30b, respectively.

Finally, the cooling system 10 comprises a cooling energy transfer arrangement 42 which is adapted to transfer cooling energy between the first and the second cooling circuit 12a, 12b. In the cooling system 10 of Figure 1 the cooling energy transfer arrangement 42 comprises a heat exchanger 44 including a condenser 46 and a sub-cooler 48. The heat exchanger 44 is permanently coupled to the second cooling circuit 12b such that refrigerant flowing through the second cooling circuit 12b, after exiting the second condenser 22b, first is directed through the condenser 46 of the heat exchanger 44 and thereafter is discharged to the second accumulator 30b which also serves to store refrigerant condensed in the second condenser 22b. The refrigerant from the second accumulator 30b is directed in series first through the second sub-cooler 32b associated with the second condenser 22b and thereafter through the sub-cooler 48 of the heat exchanger 44. After exiting the sub-cooler 48 of the heat exchanger 44 the refrigerant flowing through the second cooling 12b, by means of the second conveying device 34b, is conveyed to the second evaporators 14b.

Further, the cooling energy transfer arrangement 42 comprises a valve 50 which in its closed state is adapted to disconnect the heat exchanger 44 from the first cooling circuit 12a and which in its open state is adapted to connect the cooling heat exchanger 44 to the first cooling circuit 12a. When the valve 50 opens the connection between the heat exchanger 44 from the first cooling circuit 12a, refrigerant flowing through the first cooling circuit 12a downstream of the first conveying device 34a is directed in series first through the condenser 46 and thereafter through the sub-cooler 48 of the heat exchanger 44. Further, the coupling between the heat exchanger 44 and the first cooling circuit 12a is designed such that refrigerant exiting the heat exchanger 44 is recirculated in parallel to the first and the third condenser 22a, 22c.

The heat exchanger 44 is adapted to thermally couple the first and the second cooling circuit 12a, 12b while maintaining a hermetic separation of the first and the second cooling circuit 12a, 12b. This is achieved by providing the heat exchanger 44 with separate and hermatically sealed flow path fields for the refrigerant flowing through the first cooling circuit 12a and the refrigerant flowing through the second cooling circuit 12b.

The valve 50, by means of a control device not shown in Figure 1, is controlled in dependence on the operating state of the cooling system 10. In particular, the valve 50 is controlled so as to connect the cooling heat exchanger 44 to the first cooling circuit 12a, if the amount cooling energy provided by the second heat sink 29b and/or the second condenser 22b is not sufficient to ensure proper operation of the second evaporators 14b. Within the heat exchanger 44 then at least a part of the cooling energy provided by the first heat sink 29a, the first condenser 22a, the third heat sink 29c and/or the third condenser 22c is transferred to the second cooling circuit 12b. Similarly, the valve 50 is controlled so as to connect the cooling heat exchanger 44 to the first cooling circuit 12 also in operational states of the cooling system 10 wherein the amount cooling energy provided by the first heat sink 29a, the first condenser 22a, the third heat sink 29c and/or the third condenser 22c is not sufficient to ensure proper operation of the first evaporators 14. Within the heat exchanger 44 then at least a part of the cooling energy provided by the second heat sink 29b and/or the second condenser 22b is transferred to the first cooling circuit 12a.

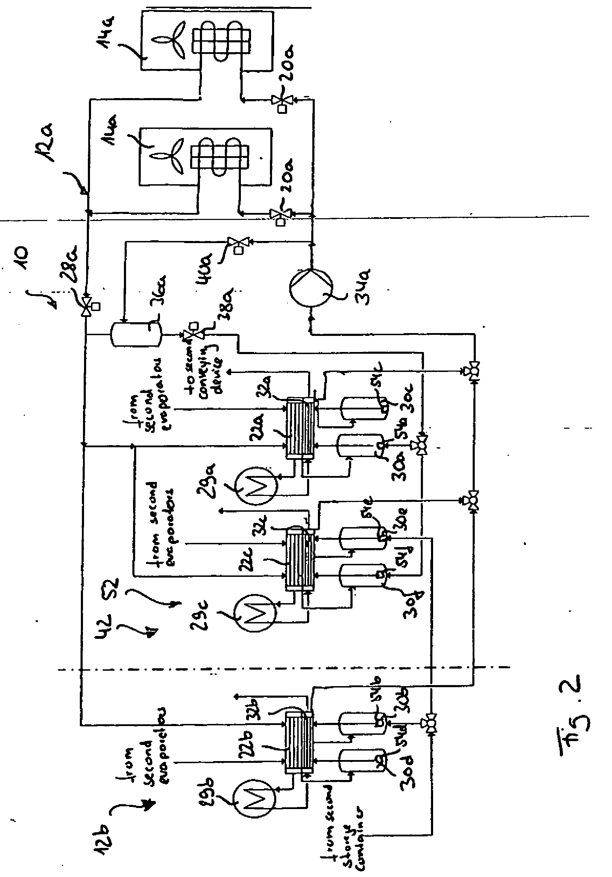

The cooling system 10 according to Figure 2 differs from the cooling system 10 of Figure 1 in that the cooling energy transfer arrangement 42 comprises a tubing system 52 which is adapted to connect the first evaporators 14a to the second condenser 22b. This allows the first evaporators 14b to be supplied with liquid refrigerant condensed in the second condenser 22b. Further, the tubing system 52 is adapted to connect the second evaporators 14b (not shown in Figure 2) to the first condenser 22a so as to allow the second evaporators 14b to be supplied with liquid refrigerant condensed in the first condenser. Finally, the tubing system 52 of the cooling energy transfer arrangement 42 also is adapted to connect the second evaporators 14b to the third condenser 22c. The tubing system 52 is adapted to maintain a hermetic separation of the first and the second cooling circuit 12a, 12b.

Further, the cooling system 10 of Figure 2 comprises a third accumulator 30c which is disposed in the second cooling circuit 12b and which is adapted to store refrigerant condensed in the first condenser 22a prior to being supplied to the sub-cooler 32a associated with the first condenser 22a. A fourth accumulator 30d is disposed in the first cooling circuit 12a and is adapted to receive refrigerant condensed in the second condenser 22b. The cooling system 10 further is provided with a fifth accumulator 30e disposed in the second cooling circuit 12b and being adapted to receive refrigerant condensed in the third condenser 22c and a sixth accumulator 30f disposed in the first cooling circuit 12a and being adapted to receive refrigerant condensed in the third condenser 22c. The first conveying device 34a for conveying refrigerant through the first cooling circuit 12a is connected to the first, the fourth accumulator and the sixth accumulator 30a, 30d, 30f. The second conveying device 34b for conveying refrigerant through the second cooling circuit 12b is connected to the second, the third accumulator and the fifth accumulator 30b, 30c, 30e.

The cooling system 10 of Figure 2 further comprises a first interruption device 54a adapted to interrupt a connection between the first conveying device 34a and the first accumulator 30a, if a refrigerant level in the first accumulator 34a falls below a predetermined threshold value, a second interruption device 54a adapted to interrupt a connection between the second conveying device 34b and the second accumulator 30b, if a refrigerant level in the second accumulator 30b falls below a predetermined threshold value, a third interruption device 54c adapted to interrupt a connection between the second conveying device 34b and the third accumulator 30c, if a refrigerant level in the third accumulator30c falls below a predetermined threshold value, a fourth interruption device 54d adapted to interrupt a connection between the first conveying device 34a and the fourth accumulator 30d, if a refrigerant level in the fourth accumulator 30d falls below a predetermined threshold value, a fifth interruption device 54e adapted to interrupt a connection between the second conveying device 34b and the fifth accumulator 30e, if a refrigerant level in the fifth accumulator 30e falls below a predetermined threshold value, and a sixth interruption device 54f adapted to interrupt a connection between the first conveying device 34a and the sixth accumulator 30f, if a refrigerant level in the sixth accumulator falls below a predetermined threshold value.

The interruption devices 54a-54f ensure that the conveying devices 34a, 34b do not convey gaseous refrigerant from accumulators 30a-30f which do not contain a sufficient amount of liquid refrigerant. Each of the interruption devices 54a-54f comprises a float valve which is disposed in one of the accumulators 30a-30f and with closes a respective refrigerant outlet of the accumulator 30a-30f, as soon as a refrigerant level in the accumulator 30a-30f falls below a predetermined threshold value. Otherwise the structure and the function of the cooling system 10 according to Figure 2 correspond to the structure and the function of the cooling system 10 of Figure 1.

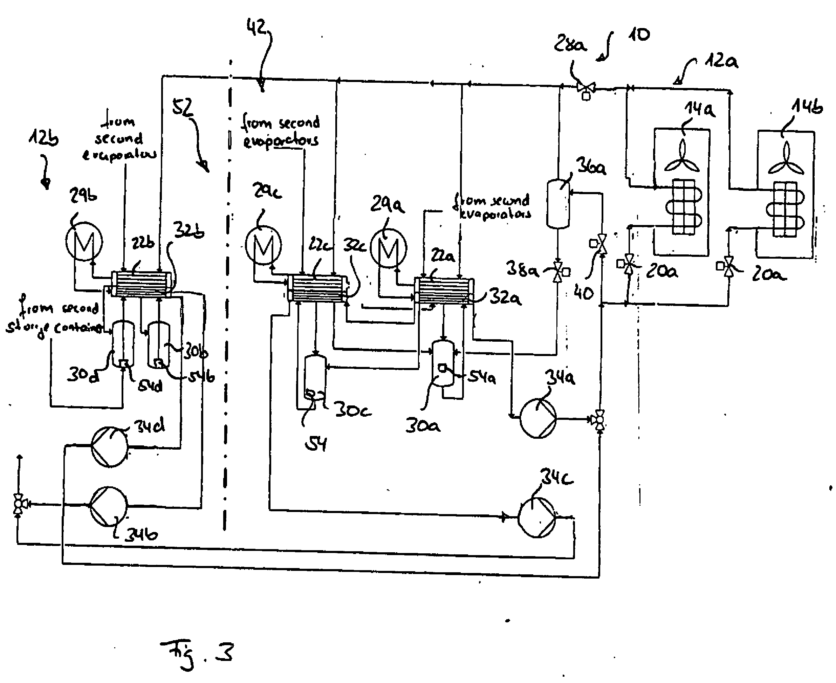

The cooling system 10 according to Figure 3 differs from the cooling system 10 of Figure 2 in that the first accumulator 30a is used to store refrigerant condensed in the first and the third condenser 22a, 22c. Similarly, the third accumulator 30c is also used to store refrigerant condensed in the first and third condenser 22a, 22c. Hence the fifth and the sixth accumulator 30e, 30f present in the cooling system 10 of Figure 2 can be dispensed with. Further, in the cooling system according to Figure 3 the first conveying device 34a only serves to discharge refrigerant from the first accumulator 30a while the second conveying device 34b only serves to discharge refrigerant from the second accumulator 30b. A third conveying device 34c is provided to discharge refrigerant from the third accumulator 30c and a fourth conveying device 34d is provided to discharge refrigerant from the fourth accumulator 30d. Otherwise the structure and the function of the cooling system 10 according to Figure 3 correspond to the structure and the function of the cooling system 10 of Figure 2.

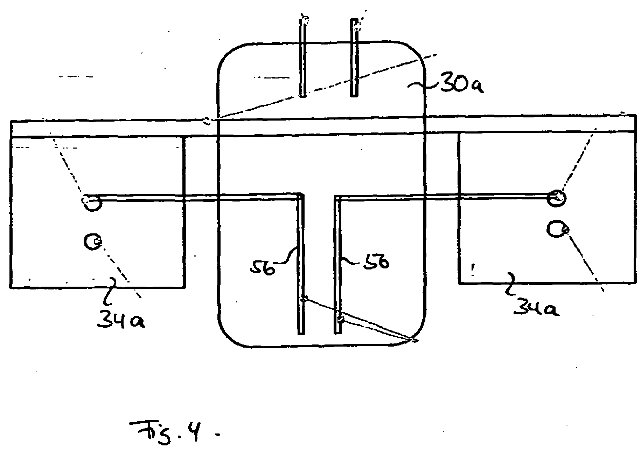

An accumulator arrangement depicted in Figure 4 can be employed in the cooling system 10 of Figure 3. The accumulator arrangement of Figure 4, however, also is suitable for use in any one of cooling system 10 of Figures 1, 2 or 5. In the accumulator arrangement a first accumulator 30a is connected to two redundant first conveying devices 34a. Suction lines 56 of the conveying devices 34a which connect the refrigerant inlets of the conveying devices 34a to the accumulator 30a are disposed at least partially within the accumulator 30a, ensuring that refrigerant is supplied to the conveying devices 34a from the accumulator in its liquid state of aggregation. Excess wear of the conveying devices 34a due to cavitation thus can be prevented.

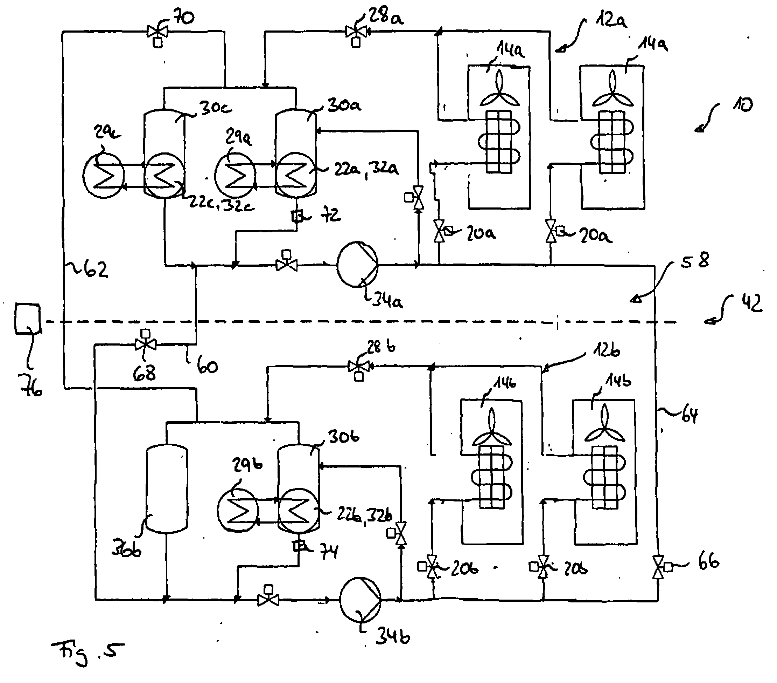

In the cooling system according to Figure 5 the cooling energy transfer arrangement 42 comprises a tubing and valve system 58 which is adapted to establish a fluid connection between the firsst and the second cooling circuit 12a, 12b. The tubing and valve system 58 comprises connecting lines 60, 62, 64 connecting the first and the second cooling circuit 12a, 12b as well as respective valves 66, 68, 70 for controlling the flow refrigerant between the first and the second cooling circuit 12a, 12b through the connecting lines 60, 62, 64.

Further, the cooling system 10 comprises a first detection device 72 adapted to detect the amount of refrigerant circulating in the first cooling circuit 12a, and a second detection device 74 adapted to detect the amount of refrigerant circulating in the second cooling circuit 12b. A control unit 76 is adapted to control the tubing and valve system 58 in dependence on signals provided to the control unit 76 by the first and the second detection device 72, 74. In particular, the control unit 76 is adapted to control the tubing and valve system 58 such that a fluid connection between the first and the second cooling circuit 12a, 12b is only established, if the signals provided to the control unit 76 by the first and/or the second detection device 72, 74 indicate that an amount of refrigerant circulating in the first cooling circuit 12a and an amount of refrigerant circulating in the second cooling circuit 12b exceed a predetermined threshold value. This ensures that a fluid connection between the first and the second cooling circuit 12a, 12b is not established in case of a leakage in one of the cooling circuits 12a, 12b.

Further, the control unit 76 is adapted to control the tubing and valve system 58 such that a fluid connection between the first condenser 22a and the first evaporators 14a and a fluid connection between the third condenser 22c and the first evaporators 14a are interrupted, in case a fluid connection between the first and the second cooling circuit 12a, 12b is established in the event of failure of the cooling energy supply to the first evaporators 14a via the first cooling circuit 12a. Additionally thereto, the control unit 76 is adapted to control the tubing and valve system 58 such that a fluid connection between the second condenser 22b and the second evaporators 14b is interrupted, in case a fluid connection between the first and the second cooling circuit 12a, 12b is established in the event of failure of the cooling energy supply to the second evaporators 14b via the second cooling circuit 12b.

Moreover, the control unit 76 is adapted to interrupt the operation of the first conveying device 34a for conveying refrigerant through the first cooling circuit 12a, in case a fluid connection between the first and the second cooling circuit 12a, 14 is established in the event of failure of the cooling energy supply to the first evaporators 14a via the first cooling circuit 12a, and to interrupt the operation of the second conveying device 34b for conveying refrigerant through the second cooling circuit 12b, in case a fluid connection between the first and the second cooling circuit 12a, 12b is established in the event of failure of the cooling energy supply to the second evaporators 14b via the second cooling circuit 12b. Otherwise the structure and the function of the cooling system 10 according to Figure 5 correspond to the structure and the function of the cooling systems 10 of Figures 1 to 3.

For controlling the start-up of any one of the cooling systems 10 depicted in Figure 1 to 3 and 5 there are different options. As a first option, upon start-up of the cooling system 10, all evaporators 14a, 14b are simultaneously supplied with cooling energy. Typically the cooling system 10 will be designed for this start-up mode of operation. It is, however, also conceivable to control the supply of cooling energy to the evaporators 14a, 14b upon start-up of the cooling system 100 such that at first only selected ones of the evaporators 14a, 14b are supplied with cooling energy until a predetermined target temperature of the selected evaporators 14a, 14b supplied with cooling energy is reached. Only then also the remaining evaporators 14a, 14b may be supplied with cooling energy. In this start-up mode of operation the amount of heat to be discharged by means of the cooling system 10 is smaller than in a mode of operation wherein all evaporators 14a, 14b are simultaneously supplied with cooling energy. Hence, heat sinks 29a, 29b, 29c designed in the form of chillers can be operated at lower temperatures allowing heat to be discharged from the cooling energy consumers rather quickly due to the large temperature difference between the operating temperature of the heat sinks 29a, 29b, 29c and the temperature of the cooling energy consumers.

Finally, it is also conceivable to control the supply of cooling energy to the evaporators 14a, 14b upon start-up of the cooling system 10 such that at first all evaporators 14a, 14b are simultaneously supplied with cooling energy until a predetermined intermediate temperature of the evaporators 14a, 14b is reached. Immediately after start-up of the cooling system 10 the temperature difference between the operating temperature of heat sinks 29a, 29b, 29c designed in the form of chillers and the temperature of the cooling energy consumers still is high allowing a quick removal of heat from the cooling energy consumers. After reaching the predetermined intermediate temperature of the evaporators 14a, 14b the operating temperature of the heat sinks 29a, 29b, 29c may be reduced and further cooling energy may be supplied only to selected ones of the evaporators 14a, 14b until a predetermined target temperature of the selected evaporators 14a, 14b supplied with cooling energy is reached. Finally, the remaining evaporators 14a, 14b may be supplied with cooling energy until a predetermined target temperature is reached also for these evaporators 14a, 14b. Again a quick removal of heat from the cooling energy consumers may be achieved due to the large temperature difference between the operating temperature of the heat sinks 29a, 29b, 29c and the temperature of the cooling energy consumers.

## Claims

1. Cooling system (10), in particular for use on board an aircraft, the cooling system (10) comprising:
- a first cooling circuit (12a) allowing circulation of a two-phase refrigerant therethrough,
- a first evaporator (14a) disposed in the first cooling circuit (12a),
- a first condenser (22a) disposed in the first cooling circuit (12a), and
- a first heat sink (29a) adapted to provide cooling energy to the first condenser (22a),
- a second cooling circuit (12b) allowing circulation of a two-phase refrigerant therethrough,
- a second evaporator (14b) disposed in the second cooling circuit (12b),
- a second condenser (22b) disposed in the second cooling circuit (12b),
- a second heat sink (29b) adapted to provide cooling energy to the second condenser (22b), and
- a cooling energy transfer arrangement (42) which is adapted to transfer cooling energy provided by the first heat sink (29a) and/or the first condenser (22a) to the second cooling circuit (12b) or to transfer cooling energy provided by the second heat sink (29b) and/or the second condenser (22b) to the first cooling circuit (12a), **characterized in that** the cooling energy transfer arrangement (42) comprises a heat exchanger (44) which is adapted to be connected to the first cooling circuit (12a) such that refrigerant exiting the first condenser (22a) is thermally coupled to the refrigerant flowing through the second cooling circuit (12b) and to be connected to the second cooling circuit (12b) such that refrigerant exiting the second condenser (22b) is thermally coupled to the refrigerant flowing through the first cooling circuit (12a) while maintaining a hermetic separation of the first and the second cooling circuit (12a, 12b).

2. Cooling system according to claim 1,
**characterized by**
- a third condenser (22c) disposed in the first cooling circuit (12a), and
- a third heat sink (29c) adapted to provide cooling energy to the third condenser (22c).

3. Cooling system according to claim 1 or 2,
**characterized by** at least one sub-cooler (32a, 32b, 32c) associated with one of the condensers (22a, 22b, 22c), the sub-cooler (32a, 32b, 32c) being adapted to sub-cool refrigerant exiting the associated condenser (22a, 22b, 22c).

4. Cooling system according to any one of claims 1 to 3,
**characterized by**
- a first accumulator (30a) disposed in the first cooling circuit (12a) and being adapted to receive refrigerant condensed in the first and/or the third condenser (22a, 22c), and/or
- a second accumulator (30b) disposed in the second cooling circuit (12b) and being adapted to receive refrigerant condensed in the second condenser (22b).

5. Cooling system according to claim 1,
**characterized in that** the cooling energy transfer arrangement (42) comprises a valve (50) which in its closed state is adapted to disconnect the heat exchanger (44) from the first cooling circuit (12a) and which in its open state is adapted to connect the heat exchanger (44) to the first cooling circuit (12a).

6. Cooling system according to any one of claims 1 to 5,
**characterized in that** the cooling energy transfer arrangement (42) comprises a tubing system (52) which is adapted to connect the first evaporator (14a) to the second condenser (22b) and which further is adapted to connect the second evaporator (14b) to the first condenser (22a) while maintaining a hermetic separation of the first and the second cooling circuit (12a, 12b).

7. Cooling system according to any one of claims 1 to 6,
**characterized by**:
- a third accumulator (30c) disposed in the second cooling circuit (12b) and being adapted to receive refrigerant condensed in the first and/or the third condenser (22a, 22c),
- a fourth accumulator (30d) disposed in the first cooling circuit (12a) and being adapted to receive refrigerant condensed in the second condenser (22b),
- a fifth accumulator (30e) disposed in the second cooling circuit (12b) and being adapted to receive refrigerant condensed in the third condenser (22c), and/or
- a sixth accumulator (30f) disposed in the first cooling circuit (12a) and being adapted to receive refrigerant condensed in the third condenser (22c).

8. Cooling system according to claim 7,
**characterized in that** a first conveying device (34a) for conveying refrigerant through the first cooling circuit (12a) is connected to the first and the fourth accumulator (30a, 30d) and/or **in that** a second conveying device (34b) for conveying refrigerant through the second cooling circuit (12b) is connected to the second and the third accumulator (30b, 30c).

9. Cooling system according to claim 8,
**characterized by**
- a first interruption device (54a) adapted to interrupt a connection between a conveying device, in particular the first conveying device (34a), and the first accumulator (30a), if a refrigerant level in the first accumulator (30a) falls below a predetermined threshold value,
- a second interruption device (54b) adapted to interrupt a connection between a conveying device, in particular the second conveying device (34b), and the second accumulator (30b), if a refrigerant level in the second accumulator (30b) falls below a predetermined threshold value,
- a third interruption device (54c) adapted to interrupt a connection between a conveying device, in particular the second conveying device (34b), and the third accumulator (30c), if a refrigerant level in the third accumulator (30c) falls below a predetermined threshold value,
- a fourth interruption device (54d) adapted to interrupt a connection between a conveying device, in particular the first conveying device (34a), and the fourth accumulator (30d), if a refrigerant level in the fourth accumulator (30d) falls below a predetermined threshold value,
- a fifth interruption device (54e) adapted to interrupt a connection between a conveying device, in particular the second conveying device (34b), and the fifth accumulator (30e), if a refrigerant level in the fifth accumulator (30e) falls below a predetermined threshold value, and/or
- a sixth interruption device (54f) adapted to interrupt a connection between a conveying device, in particular the first conveying device (34a), and the sixth accumulator (30f), if a refrigerant level in the sixth accumulator (30f) falls below a predetermined threshold value.

10. Cooling system according to any one of claims 1 to 4,
**characterized in that** the cooling energy transfer arrangement (42) comprises a tubing and valve system (58) which is adapted to establish a fluid connection between the first and the second cooling circuit (12a, 12b).

11. Cooling system according to claim 10,
**characterized by**
- a first detection device (72) adapted to detect the amount of refrigerant circulating in the first cooling circuit (12a), and/or
- a second detection device (74) adapted to detect the amount of refrigerant circulating in the second cooling circuit (12b), and
- a control unit (76) which is adapted to control the tubing and valve system (58) of the cooling energy transfer arrangement (42) in dependence on signals provided to the control unit (76) by the first and/or the second detection device (72, 74), wherein the control unit (76) is in particular adapted to control the tubing and valve system (58) of the cooling energy transfer arrangement (42) such that a fluid connection between the first and the second cooling circuit (12a, 12b) is only established, if the signals provided to the control unit (76) by the first and/or the second detection device (72, 74) indicate that an amount of refrigerant circulating in the first cooling circuit (12a) and/or an amount of refrigerant circulating in the second cooling circuit (12b) exceed(s) a predetermined threshold value.

12. Cooling system according to claim 9 or 10,
**characterized in that** the control unit (76) is adapted to control the tubing and valve system (58) of the cooling energy transfer arrangement (42) such that
- a fluid connection between the first condenser (22a) and the first evaporator (14a) and/or a fluid connection between the third condenser (22c) and the first evaporator (14a) is/are interrupted, in case a fluid connection between the first and the second cooling circuit (12a, 12b) is established in the event of failure of the cooling energy supply to the first evaporator (14a) via the first cooling circuit (12a), and/or such that
- a fluid connection between the second condenser (22b) and the second evaporator (14b) is interrupted, in case a fluid connection between the first and the second cooling circuit (12a, 12b) is established in the event of failure of the cooling energy supply to the second evaporator (14b) via the second cooling circuit (12b).

13. Cooling system according to any one of claims 9 to 12,
**characterized in that** the control unit (76) is adapted to interrupt the operation of a first conveying device (34a) for conveying refrigerant through the first cooling circuit (12a), in case a fluid connection between the first and the second cooling circuit (12a, 12b) is established in the event of failure of the cooling energy supply to the first evaporator (14a) via the first cooling circuit (12a), and/or to interrupt the operation of a second conveying device (34b) for conveying refrigerant through the second cooling circuit (12b), in case a fluid connection between the first and the second cooling circuit (12a, 12b) is established in the event of failure of the cooling energy supply to the second evaporator (14b) via the second cooling circuit (12b).

14. Method of operating a cooling system (10), in particular for use on board an aircraft, the method comprising the steps of:
- circulating a two-phase refrigerant through a first cooling circuit (12a),
- evaporating the refrigerant in a first evaporator (14a) disposed in the first cooling circuit (12a),
- condensing the refrigerant in a first condenser (22a) disposed in the first cooling circuit (12a), and
- providing cooling energy to the first condenser from a first heat sink (29a), **characterized by**:
- circulating a two-phase refrigerant through a second cooling circuit (12b),
- evaporating the refrigerant in a second evaporator (14b) disposed in the second cooling circuit (12b),
- condensing the refrigerant in a second condenser (22b) disposed in the second cooling circuit (12b),
- providing cooling energy to the second condenser (22b) from a second heat sink (29b), and
in the event of failure of the cooling energy supply to the second evaporator (14b) via the second cooling circuit (12b) transferring cooling energy provided by the first heat sink (29a) and/or the first condenser (22a) to the second cooling circuit (12b) and/or in the event of failure of the cooling energy supply to the first evaporator (14a) via the first cooling circuit (12a) transferring cooling energy provided by the second heat sink (29b) and/or the second condenser (22b) to the first cooling circuit (12a),
wherein transferring cooling energy comprises thermally coupling refrigerant exiting the first condenser (22a) to the refrigerant flowing through the second cooling circuit (12b) and thermally coupling refrigerant exiting the second condenser (22b) to the refrigerant flowing through the first cooling circuit (12a) while maintaining a hermetic separation of the first and second cooling circuit (12a, 12b).

## Patentansprüche

1. Kühlsystem (10), insbesondere zur Verwendung an Bord eines Flugzeugs, wobei das Kühlsystem (10) umfasst:
- einen ersten Kühlkreislauf (12a), der eine Zirkulation eines zweiphasigen Kühlmittels darin ermöglicht,
- einen ersten Verdampfer (14a), der in dem ersten Kühlkreislauf (12a) angeordnet ist,
- einen ersten Kondensator (22a), der in dem ersten Kühlkreislauf (12a) angeordnet ist,
- eine erste Wärmesenke (29a), die dazu eingerichtet ist, Kühlenergie an den ersten Kondensator (22a) bereitzustellen,
- einen zweiten Kühlkreislauf (12b), der eine Zirkulation eines zweiphasigen Kühlmittels darin ermöglicht,
- einen zweiten Verdampfer (14b), der in dem zweiten Kühlkreislauf (12b) angeordnet ist,
- einen zweiten Kondensator (22b), der in dem zweiten Kühlkreislauf (12b) angeordnet ist,
- eine zweite Wärmesenke (29b), die dazu eingerichtet ist, Kühlenergie an den zweiten Kondensator (22a) bereitzustellen, und
- eine Kühlenergietransferanordnung (42), die dazu eingerichtet ist, durch die erste Wärmesenke (29a) und/oder den ersten Kondensator (22a) bereitgestellte Kühlenergie zu dem zweiten Kühlkreislauf (12b) zu transferieren oder durch die zweite Wärmesenke (29b) und/oder den zweiten Kondensator (22b) bereitgestellte Kühlenergie zu dem ersten Kühlkreislauf (12a) zu transferieren,
**dadurch gekennzeichnet, dass** die Kühlenergietransferanordnung (42) einen Wärmetauscher (44) umfasst, der dazu eingerichtet ist, an den ersten Kühlkreislauf (12a) angeschlossen zu werden, sodass den ersten Kondensator (22a) verlassendes Kühlmittel mit dem durch den zweiten Kühlkreislauf (12b) fließenden Kühlmittel thermisch gekoppelt ist, und an den zweiten Kühlkreislauf (12b) angeschlossen zu werden, sodass den zweiten Kondensator (22b) verlassendes Kühlmittel mit dem durch den ersten Kühlkreislauf (12a) fließenden Kühlmittel thermisch gekoppelt ist, während eine hermetische Trennung des ersten und des zweiten Kühlkreislaufs (12a, 12b) beibehalten wird.

2. Kühlsystem gemäß Anspruch 1,
**gekennzeichnet durch**
- einen dritten Kondensator (22c), der in dem ersten Kühlkreislauf (12a) angeordnet ist, und
- eine dritte Wärmesenke (29c), die dazu eingerichtet ist, Kühlenergie an den dritten Kondensator (22c) bereitzustellen.

3. Kühlsystem gemäß Anspruch 1 oder 2,
**gekennzeichnet durch** mindestens einen Unterkühler (32a, 32b, 32c) zugehörig zu einem der Kondensatoren (22a, 22b, 22c), wobei der Unterkühler (32a, 32b, 32c) dazu eingerichtet ist, den zugehörigen Kondensator (22a, 22b, 22c) verlassendes Kühlmittel zu unterkühlen.

4. Kühlsystem gemäß einem der Ansprüche 1 bis 3,
**gekennzeichnet durch**
- einen ersten Sammler (30a), der in dem ersten Kühlkreislauf (12a) angeordnet ist und dazu eingerichtet ist, von dem ersten und/oder dem dritten Kondensator (22a, 22c) kondensiertes Kühlmittel aufzunehmen, und/oder
- einen zweiten Sammler (30b), der in dem zweiten Kühlkreislauf (12b) angeordnet ist und dazu eingerichtet ist, von dem zweiten Kondensator (22b) kondensiertes Kühlmittel aufzunehmen.

5. Kühlsystem gemäß Anspruch 1,
**dadurch gekennzeichnet, dass** die Kühlenergietransferanordnung (42) ein Ventil (50), das in seinem geschlossenen Zustand dazu eingerichtet ist, den Wärmetauscher (44) von dem ersten Kühlkreislauf (12a) zu trennen, und das in seinem geöffneten Zustand dazu eingerichtet ist, den Wärmetauscher (44) mit dem ersten Kühlkreislauf (12a) zu verbinden, umfasst.

6. Kühlsystem gemäß einem der Ansprüche 1 bis 5,
**dadurch gekennzeichnet, dass** die Kühlenergietransfervorrichtung (42) ein Leitungssystem (52), das dazu eingerichtet ist, den ersten Verdampfer (14a) mit dem zweiten Kondensator (22b) zu verbinden, und das ferner dazu eingerichtet ist, den zweiten Verdampfer (14b) mit dem ersten Kondensator (22a) zu verbinden, während eine hermetische Trennung des ersten und des zweiten Kühlkreislaufs (12a, 12b) beibehalten wird, umfasst.

7. Kühlsystem gemäß einem der Ansprüche 1 bis 6,
**gekennzeichnet durch**:
- einen dritten Sammler (30c), der in dem zweiten Kühlkreislauf (12b) angeordnet ist und dazu eingerichtet ist, von dem ersten und/oder dem dritten Kondensator (22a, 22c) kondensiertes Kühlmittel aufzunehmen,
- einen vierten Sammler (30d), der in dem ersten Kühlkreislauf (12a) angeordnet ist und dazu eingerichtet ist, von dem zweiten Kondensator (22b) kondensiertes Kühlmittel aufzunehmen,
- einen fünften Sammler (30e), der in dem zweiten Kühlkreislauf (12b) angeordnet ist und dazu eingerichtet ist, von dem dritten Kondensator (22c) kondensiertes Kühlmittel aufzunehmen, und/oder
- einen sechsten Sammler (30f), der in dem ersten Kühlkreislauf (12a) angeordnet ist und dazu eingerichtet ist, von dem dritten Kondensator (22c) kondensiertes Kühlmittel aufzunehmen.

8. Kühlsystem gemäß Anspruch 7,
**dadurch gekennzeichnet, dass** ein erstes Fördergerät (34a) zum Fördern von Kühlmittel durch den ersten Kühlkreislauf (12a) mit dem ersten und dem vierten Sammler (30a, 30d) verbunden ist, und/oder dass ein zweites Fördergerät (34b) zum Fördern von Kühlmittel durch den zweiten Kühlkreislauf (12b) mit dem zweiten und dem dritten Sammler (30b, 30c) verbunden ist.

9. Kühlsystem gemäß Anspruch 8,
**gekennzeichnet durch**:
- ein erstes Unterbrechungsgerät (54a), das dazu eingerichtet ist, eine Verbindung zwischen einem Fördergerät, insbesondere dem ersten Fördergerät (34a), und dem ersten Sammler (30a) zu unterbrechen, wenn ein Kühlmittelstand in dem ersten Sammler (30a) unter einen vorgegebenen Schwellenwert fällt,
- ein zweites Unterbrechungsgerät (54b), das dazu eingerichtet ist, eine Verbindung zwischen einem Fördergerät, insbesondere dem zweiten Fördergerät (34b), und dem zweiten Sammler (30b) zu unterbrechen, wenn ein Kühlmittelstand in dem zweiten Sammler (30b) unter einen vorgegebenen Schwellenwert fällt,
- ein drittes Unterbrechungsgerät (54c), das dazu eingerichtet ist, eine Verbindung zwischen einem Fördergerät, insbesondere dem zweiten Fördergerät (34b), und dem dritten Sammler (30c) zu unterbrechen, wenn ein Kühlmittelstand in dem dritten Sammler (30c) unter einen vorgegebenen Schwellenwert fällt,
- ein viertes Unterbrechungsgerät (54d), das dazu eingerichtet ist, eine Verbindung zwischen einem Fördergerät, insbesondere dem ersten Fördergerät (34a), und dem vierten Sammler (30d) zu unterbrechen, wenn ein Kühlmittelstand in dem vierten Sammler (30d) unter einen vorgegebenen Schwellenwert fällt,
- ein fünftes Unterbrechungsgerät (54e), das dazu eingerichtet ist, eine Verbindung zwischen einem Fördergerät, insbesondere dem zweiten Fördergerät (34b), und dem fünften Sammler (30e) zu unterbrechen, wenn ein Kühlmittelstand in dem fünften Sammler (30e) unter einen vorgegebenen Schwellenwert fällt, und/oder
- ein sechstes Unterbrechungsgerät (54f), das dazu eingerichtet ist, eine Verbindung zwischen einem Fördergerät, insbesondere dem ersten Fördergerät (34a), und dem sechsten Sammler (30f) zu unterbrechen, wenn ein Kühlmittelstand in dem sechsten Sammler (30f) unter einen vorgegebenen Schwellenwert fällt.

10. Kühlsystem gemäß einem der Ansprüche 1 bis 4,
**dadurch gekennzeichnet, dass** die Kühlenergietransfervorrichtung (42) ein Leitungs- und Ventilsystem (58), das dazu eingerichtet ist, eine Flüssigkeitsverbindung zwischen dem ersten und dem zweiten Kühlkreislauf (12a, 12b) herzustellen, umfasst.

11. Kühlsystem gemäß Anspruch 10,
**gekennzeichnet durch**:
- ein erstes Detektiergerät (72), das dazu eingerichtet ist, die Menge an in dem ersten Kühlkreislauf (12a) zirkulierendem Kühlmittel zu detektieren, und/oder
- ein zweites Detektiergerät (74), das dazu eingerichtet ist, die Menge an in dem zweiten Kühlkreislauf (12b) zirkulierendem Kühlmittel zu detektieren, und
- eine Steuerungseinheit (76), die dazu eingerichtet ist, das Leitungs- und Ventilsystem (58) der Kühlenergietransfervorrichtung (42) in Abhängigkeit von Signalen, die der Steuerungseinheit (76) **durch** das erste und/oder das zweite Detektiergerät (72, 74) bereitgestellt werden, zu steuern,
wobei die Steuerungseinheit (76) insbesondere dazu eingerichtet ist, das Leitungs- und Ventilsystem (58) der Kühlenergietransfervorrichtung (42) so zu steuern, dass eine Flüssigkeitsverbindung zwischen dem ersten und dem zweiten Kühlkreislauf (12a, 12b) nur hergestellt wird, wenn die Signale, die der Steuerungseinheit (76) durch das erste und/oder das zweite Detektiergerät (72, 74) bereitgestellt werden, anzeigen, dass eine Menge an in dem ersten Kühlkreislauf (12a) zirkulierendem Kühlmittel und/oder eine Menge an in dem zweiten Kühlkreislauf (12b) zirkulierendem Kühlmittel einen vorgegebenen Schwellenwert übersteigt/übersteigen.

12. Kühlsystem gemäß Anspruch 9 oder 10,
**dadurch gekennzeichnet, dass** die Steuerungseinheit (76) dazu eingerichtet ist, das Leitungs- und Ventilsystem (58) der Kühlenergietransfervorrichtung (42) zu steuern, sodass
- eine Flüssigkeitsverbindung zwischen dem ersten Kondensator (22a) und dem ersten Verdampfer (14a) und/oder eine Flüssigkeitsverbindung zwischen dem dritten Kondensator (22c) und dem ersten Verdampfer (14a) unterbrochen wird/werden, für den Fall, dass eine Flüssigkeitsverbindung zwischen dem ersten und dem zweiten Kühlkreislauf (12a, 12b) für den Fall hergestellt wird, dass die Kühlenergieversorgung zu dem ersten Verdampfer (14a) durch den ersten Kühlkreislauf (12a) fehlschlägt, und/oder sodass
- eine Flüssigkeitsverbindung zwischen den zweiten Kondensator (22b) und dem zweiten Verdampfer (14b) unterbrochen wird, für den Fall, dass eine Flüssigkeitsverbindung zwischen dem ersten und dem zweiten Kühlkreislauf (12a, 12b) für den Fall hergestellt wird, dass die Kühlenergieversorgung zu dem zweiten Verdampfer (14b) durch den zweiten Kühlkreislauf (12b) fehlschlägt.

13. Kühlsystem gemäß einem der Ansprüche 9 bis 12,
**dadurch gekennzeichnet, dass** die Steuerungseinheit (76) dazu eingerichtet ist, den Betrieb eines ersten Fördergeräts (34a) zum Fördern von Kühlmittel durch den ersten Kühlkreislauf (12a), für den Fall dass eine Flüssigkeitsverbindung zwischen dem ersten und dem zweiten Kühlkreislauf (12a, 12b) für den Fall hergestellt wird, dass die Kühlenergieversorgung zu dem ersten Verdampfer (14a) durch den ersten Kühlkreislauf (12a) fehlschlägt, zu unterbrechen und/oder den Betrieb eines zweiten Fördergeräts (34b) zum Fördern von Kühlmittel durch den zweiten Kühlkreislauf (12b), für den Fall, dass eine Flüssigkeitsverbindung zwischen dem ersten und dem zweiten Kühlkreislauf (12a, 12b) für den Fall hergestellt wird, dass die Kühlenergieversorgung zu dem zweiten Verdampfer (14b) über den zweiten Kühlkreislauf (12b) fehlschlägt, zu unterbrechen.

14. Verfahren zum Betreiben eines Kühlsystems (10), insbesondere zur Verwendung an Bord eines Flugzeugs, wobei das Verfahren die Schritte umfasst:
- Zirkulieren eines zweiphasigen Kühlmittels durch einen ersten Kühlkreislauf (12a),
- Verdampfen des Kühlmittels in einem ersten Verdampfer (14a), der in dem ersten Kühlkreislauf (12a) angeordnet ist,
- Kondensieren des Kühlmittels in einem ersten Kondensator (22a), der in dem ersten Kühlkreislauf (12a) angeordnet ist, und
- Bereitstellen von Kühlenergie an den ersten Kondensator von einer ersten Wärmesenke (29a),
**gekennzeichnet durch**
- Zirkulieren eines zweiphasigen Kühlmittels **durch** einen zweiten Kühlkreislauf (12b),
- Verdampfen des Kühlmittels in einem zweiten Verdampfer (14b), der in dem zweiten Kühlkreislauf (12b) angeordnet ist,
- Kondensieren des Kühlmittels in einem zweiten Kondensator (22b), der in dem zweiten Kühlkreislauf (12b) angeordnet ist,
- Bereitstellen von Kühlenergie an den zweiten Kondensator (22b) von einer zweiten Wärmesenke (29b), und
für den Fall, dass die Kühlenergieversorgung zu dem zweiten Verdampfer (14b) durch den zweiten Kühlkreislauf (12b) fehlschlägt, Transferieren von Kühlenergie, die durch die erste Wärmesenke (29a) und/oder den ersten Kondensator (22a) bereitgestellt wird, zu dem zweiten Kühlkreislauf (12b), und/oder für den Fall, dass die Kühlenergieversorgung zu dem ersten Verdampfer (14a) **durch** den ersten Kühlkreislauf (12a) fehlschlägt, Transferieren von Kühlenergie, die **durch** die zweite Wärmesenke (29b) und/oder den zweiten Kondensator (22b) bereitgestellt wird, zu dem ersten Kühlkreislauf (12a),
wobei das Transferieren von Kühlenergie ein thermisches Koppeln von Kühlmittel, das den ersten Kondensator (22a) verlässt, mit dem Kühlmittel, das **durch** den zweiten Kühlkreislauf (12b) fließt, und ein thermisches Koppeln von Kühlmittel, das den zweiten Kondensator (22b) verlässt, mit dem Kühlmittel, das **durch** den ersten Kühlkreislauf (12a) fließt, umfasst, während eine hermetische Trennung des ersten und des zweiten Kühlkreislaufs (12a, 12b) beibehalten wird.

## Revendications

1. Système de refroidissement (10) destiné en particulier à être utilisé à bord d'un aéronef, le système de refroidissement (10) comprenant :
- un premier circuit de refroidissement (12a) permettant la circulation d'un réfrigérant à deux phases au travers,
- un premier évaporateur (14a) disposé dans le premier circuit de refroidissement (12a),
- un premier condenseur (22a) disposé dans le premier circuit de refroidissement (12a), et
- un premier puits thermique (29a) adapté à fournir de l'énergie de refroidissement au premier condenseur (22a),
- un deuxième circuit de refroidissement (12b) permettant la circulation du réfrigérant à deux phases au travers de celui-ci,
- un deuxième évaporateur (14b) disposé dans le deuxième circuit de refroidissement (12b),
- un deuxième condenseur (22b) disposé dans le deuxième circuit de refroidissement (12b),
- un deuxième puits thermique (29b) adapté à fournir de l'énergie de refroidissement au deuxième condenseur (22b), et
- un agencement de transfert d'énergie de refroidissement (42) qui est adapté à transférer de l'énergie de refroidissement par le premier puits thermique (29a) et/ou le premier condenseur (22a) vers le deuxième circuit de refroidissement (12b) ou pour transférer l'énergie de refroidissement fournie par le deuxième puits thermique (29b) et/ou le deuxième condenseur (22b) vers le premier circuit de refroidissement (12a), **caractérisé en ce que** l'agencement de transfert d'énergie de refroidissement (42) comprend un échangeur thermique (44) qui est adapté à être relié au premier circuit de refroidissement (12a) de telle sorte que le réfrigérant sortant du premier condenseur (22a) est couplé thermiquement au réfrigérant s'écoulant à travers le deuxième circuit de refroidissement (12b) et pour être relié au deuxième circuit de refroidissement (12b) de telle sorte que le réfrigérant sortant du deuxième condenseur (22b) est couplé thermiquement au réfrigérant s'écoulant à travers le premier circuit de refroidissement (12a) tout en maintenant une séparation hermétique des premier et deuxième circuits de refroidissement (12a, 12b).

2. Système de refroidissement selon la revendication 1,
**caractérisé par**
- un troisième condenseur (22c) disposé dans le premier circuit de refroidissement (12a), et
- un troisième puits thermique (29c) adapté à fournir de l'énergie de refroidissement au troisième condenseur (22c).

3. Système de refroidissement selon la revendication 1 ou 2,
**caractérisé par** au moins un sous-refroidisseur (32a, 32b, 32c) associé à un des condenseurs (22a, 22b, 22c), le sous-refroidisseur (32a, 32b, 32c) étant adapté à sous-refroidir le réfrigérant sortant du condenseur (22a, 22b, 22c) associé.

4. Système de refroidissement selon l'une quelconque des revendications 1 à 3,
**caractérisé par**
- un premier accumulateur (30a) disposé dans le premier circuit de refroidissement (12a) et étant adapté à recevoir le réfrigérant condensé dans le premier et/ou le troisième condenseur (22a, 22c), et/ou
- un deuxième accumulateur (30b) disposé dans le deuxième circuit de refroidissement (12b) et étant adapté à recevoir le réfrigérant condensé dans le deuxième condenseur (22b).

5. Système de refroidissement selon la revendication 1,
**caractérisé en ce que** l'agencement de transfert d'énergie de refroidissement (42) comprend une vanne (50) qui dans son état fermé, est adaptée pour déconnecter l'échangeur thermique (44) du premier circuit de refroidissement (12a) et qui dans son état ouvert, est adaptée pour connecter l'échangeur thermique (44) au premier circuit de refroidissement (12a).

6. Système de refroidissement selon l'une quelconque des revendications 1 à 5,
**caractérisé en ce que** l'agencement de transfert d'énergie de refroidissement (42) comprend un système de tubes (52) qui est adapté à connecter le premier évaporateur (14a) au deuxième condenseur (22b) et qui est en outre adapté à connecter le deuxième évaporateur (14b) au premier condenseur (22a) tout en maintenant une séparation hermétique des premier et deuxième circuits de refroidissement (12a, 12b).

7. Système de refroidissement selon l'une quelconque des revendications 1 à 6,
**caractérisé par**
- un troisième accumulateur (30c) disposé dans le deuxième circuit de refroidissement (12b) et étant adapté à recevoir le réfrigérant condensé dans le premier et/ou le troisième condenseur (22a, 22c), et/ou
- un quatrième accumulateur (30d) disposé dans le premier circuit de refroidissement (12a) et étant adapté à recevoir le réfrigérant condensé dans le deuxième condenseur (22b),
- un cinquième accumulateur (30e) disposé dans le deuxième circuit de refroidissement (12b) et étant adapté à recevoir le réfrigérant condensé dans le troisième condenseur (22c), et/ou
- un sixième accumulateur (30f) disposé dans le premier circuit de refroidissement (12a) et étant adapté à recevoir le réfrigérant condensé dans le troisième condenseur (22c).

8. Système de refroidissement selon la revendication 7,
**caractérisé en ce qu'**un premier dispositif de transport (34a) pour transporter le réfrigérant à travers le premier circuit de refroidissement (12a) est connecté aux premier et quatrième accumulateurs (30a, 30d) et/ou **en ce qu'**un deuxième dispositif de transport (34b) pour transporter le réfrigérant à travers le deuxième circuit de refroidissement (12b) est connecté aux deuxième et troisième accumulateurs (30b, 30c).

9. Système de refroidissement selon la revendication 8,
**caractérisé par**
- un premier dispositif d'interruption (54a) adapté à interrompre une connexion entre un dispositif de transport, en particulier le premier dispositif de transport (34a), et le premier accumulateur (30a), si un niveau de réfrigérant dans le premier accumulateur (30a) tombe en-dessous d'une valeur seuil prédéterminée,
- un deuxième dispositif d'interruption (54b) adapté à interrompre une connexion entre un dispositif de transport, en particulier le deuxième dispositif de transport (34b), et le deuxième accumulateur (30b), si un niveau de réfrigérant dans le deuxième accumulateur (30b) tombe en-dessous d'une valeur seuil prédéterminée,
- un troisième dispositif d'interruption (54c) adapté à interrompre une connexion entre un dispositif de transport, en particulier le deuxième dispositif de transport (34b), et le troisième accumulateur (30c), si un niveau de réfrigérant dans le troisième accumulateur (30c) tombe en-dessous d'une valeur seuil prédéterminée,
- un quatrième dispositif d'interruption (54d) adapté à interrompre une connexion entre un dispositif de transport, en particulier le premier dispositif de transport (34a), et le quatrième accumulateur (30d), si un niveau de réfrigérant dans le quatrième accumulateur (30d) tombe en-dessous d'une valeur seuil prédéterminée,
- un cinquième dispositif d'interruption (54e) adapté à interrompre une connexion entre un dispositif de transport, en particulier le deuxième dispositif de transport (34b), et le cinquième accumulateur (30e), si un niveau de réfrigérant dans le cinquième accumulateur (30e) tombe en-dessous d'une valeur seuil prédéterminée, et/ou
- un sixième dispositif d'interruption (54f) adapté à interrompre une connexion entre un dispositif de transport, en particulier le premier dispositif de transport (34a), et le sixième accumulateur (30f), si un niveau de réfrigérant dans le sixième accumulateur (30f) tombe en-dessous d'une valeur seuil prédéterminée.

10. Système de refroidissement selon l'une quelconque des revendications 1 à 4,
**caractérisé en ce que** l'agencement de transfert d'énergie de refroidissement (42) comprend un système (58) de tubes et de vannes qui est adapté à établir une connexion fluidique entre les premier et deuxième circuits de refroidissement (12a, 12b).

11. Système de refroidissement selon la revendication 10,
**caractérisé par**
- un premier dispositif de détection (72) adapté à détecter la quantité de réfrigérant circulant dans le premier circuit de refroidissement (12a), et/ou
- un deuxième dispositif de détection (74) adapté à détecter la quantité de réfrigérant circulant dans le deuxième circuit de refroidissement (12b), et
- une unité de commande (76) qui est adaptée pour commander le système (58) de tubes et de vannes de l'agencement de transfert d'énergie de refroidissement (42) en fonction de signaux fournis à l'unité de commande (76) par les premier et/ou deuxième dispositifs de détection (72, 74), dans lequel l'unité de commande (76) est en particulier adaptée pour commander le système (58) de tubes et de vannes de l'agencement de transfert d'énergie de refroidissement (42) de façon à ce qu'une connexion fluidique entre les premier et deuxième circuits de refroidissement (12a, 12b) soit établie uniquement si les signaux fournis à l'unité de commande (76) par les premier et/ou deuxième dispositifs de détection (72, 74) indiquent qu'une quantité de réfrigérant circulant dans le premier circuit de refroidissement (12a) et/ou une quantité de réfrigérant circulant dans le deuxième circuit de refroidissement (12b) dépasse(nt) une valeur seuil prédéterminée.

12. Système de refroidissement selon la revendication 9 ou 10,
**caractérisé en ce que** l'unité de commande (76) est adaptée pour commander le système (58) de tubes et de vannes de l'agencement de transfert d'énergie de refroidissement (42) de façon à ce que
- une connexion fluidique entre le premier condenseur (22a) et le premier évaporateur (14a) et/ou une connexion fluidique entre le troisième condenseur (22c) et le premier évaporateur (14a) est/sont interrompue(s), dans le cas où une connexion fluidique entre les premier et deuxième circuits de refroidissement (12a, 12b) est établie en cas de défaillance de l'alimentation en énergie de refroidissement vers le premier évaporateur (14a) par le biais du premier circuit de refroidissement (12a) et/ou de telle façon que
- une connexion fluidique entre le deuxième condenseur (22b) et le deuxième évaporateur (14b) est interrompue, dans le cas où une connexion fluidique entre les premier et deuxième circuits de refroidissement (12a, 12b) est établie en cas de défaillance de l'alimentation en énergie de refroidissement vers le deuxième évaporateur (14b) par le biais du deuxième circuit de refroidissement (12b).

13. Système de refroidissement selon l'une quelconque des revendications 9 à 12,
**caractérisé en ce que** l'unité de commande (76) est adaptée pour interrompre le fonctionnement d'un premier dispositif de transport (34a) pour transporter le réfrigérant à travers le premier circuit de refroidissement (12a), dans le cas où une connexion fluidique entre les premier et deuxième circuits de refroidissement (12a, 12b) est établie en cas de défaillance de l'alimentation en énergie de refroidissement vers le premier évaporateur (14a) par le biais du premier circuit de refroidissement (12a) et/ou pour interrompre le fonctionnement d'un deuxième dispositif de transport (34b) pour transporter le réfrigérant à travers le deuxième circuit de refroidissement (12b), dans le cas où une connexion fluidique entre les premier et deuxième circuits de refroidissement (12a, 12b) est établie en cas de défaillance de l'alimentation en énergie de refroidissement vers le deuxième évaporateur (14b) par le biais du deuxième circuit de refroidissement (12b).

14. Procédé de fonctionnement d'un système de refroidissement (10), destiné en particulier à être utilisé à bord d'un aéronef, le procédé comprenant les étapes de :
- circulation d'un réfrigérant à deux phases à travers un premier circuit de refroidissement (12a),
- évaporation du réfrigérant dans un premier évaporateur (14a) disposé dans le premier circuit de refroidissement (12a),
- condensation du réfrigérant dans un premier condenseur (22a) disposé dans le premier circuit de refroidissement (12a), et
- alimentation en énergie de refroidissement vers le premier condenseur à partir d'un premier puits thermique (29a),
**caractérisé par** :
- la circulation d'un réfrigérant à deux phases à travers un deuxième circuit de refroidissement (12b),
- l'évaporation du réfrigérant dans un deuxième évaporateur (14b) disposé dans le deuxième circuit de refroidissement (12b),
- la condensation du réfrigérant dans un deuxième condenseur (22b) disposé dans le deuxième circuit de refroidissement (12b),
- l'alimentation en énergie de refroidissement vers le deuxième condenseur (22b) à partir d'un deuxième puits thermique (29b), et
en cas de défaillance de l'alimentation en énergie de refroidissement vers le deuxième évaporateur (14b) par le biais du deuxième circuit de refroidissement (12b), le transfert de l'énergie de refroidissement fournie par le premier puits thermique (29a) et/ou le premier condenseur (22a) vers le deuxième circuit de refroidissement (12b) et/ou en cas de défaillance de l'alimentation en énergie de refroidissement vers le premier évaporateur (14a) par le biais du premier circuit de refroidissement (12a), le transfert de l'énergie de refroidissement fournie par le deuxième puits thermique (29b) et/ou le deuxième condenseur (22b) vers le premier circuit de refroidissement (12a),
dans lequel le transfert de l'énergie de refroidissement comprend le couplage thermique du réfrigérant sortant du premier condenseur (22a) au réfrigérant s'écoulant à travers le deuxième circuit de refroidissement (12b) et le couplage thermique du réfrigérant sortant du deuxième condenseur (22b) au réfrigérant s'écoulant à travers le premier circuit de refroidissement (12a) tout en maintenant une séparation hermétique des premier et deuxième circuits de refroidissement (12a, 12b).
